# EUROPEAN PATENT APPLICATION

(11) **EP 1 892 016 A1**
(43) Date of publication of application: **27.02.2008**
(21) Application number: 05761891.0
(22) Date of filing: 10.06.2005
(51) Int. Cl.: A62C 3/00, D04H 5/00, D01F 8/06, D01F 8/08, C09K 21/00, C09K 21/14, D01F 1/07

(54) **FIREPROOF BLANKET WHICH IS USED TO PROTECT PEOPLE, FURNITURE AND PROPERTY AGAINST FIRE**

(30) Priority: 09.06.2005 MX PA05006127
(71) Applicant: Grossman Goldscheider, Ricardo, Naucalpan de Juarez, Edo. de México (MX); Fis Menache, Samuel Ricardo, 11590 Miguel Hidalgo, México, D.F. (MX)
(72) Inventor: Grossman Goldscheider, Ricardo, Naucalpan de Juarez, Edo. de México (MX); Fis Menache, Samuel Ricardo, 11590 Miguel Hidalgo, México, D.F. (MX)
(74) Representative: Elzaburu Marquez, Alberto
(86) International application number: PCT/MX2005/000045
(87) International publication number: WO 2006/132520

(57) **Abstract**

The invention relates to a fireproof blanket which is used to protect people, furniture and property against fire. The inventive blanket is **characterized in that** the raw materials used comprise OPF which have been molecularly stabilized by means of thermal processing and PES. The process consists in mixing the two fibers in order to obtain the desired degree of fireproof performance and suitable tactile qualities such that it can be used for any application and can be brought into contact with the skin without causing any type of allergic reaction owing to the inert nature thereof. The aforementioned mixture is reinforced mechanically in order to provide the blanket with the transverse and longitudinal resistance properties that are required for same to be used for the following applications, namely: any type of fire-protective clothing and the applications thereof; fireproof cushioning layer for furniture, bed linen, mattresses, seats and backrests in motor vehicles, trains and aircraft; fire blankets; supports for wallpaper and fire curtains; fire protective under-carpet padding; fire protective thermal blankets; maintenance and construction work on sites with a high-, medium- o low-risk of fire; and fire protective blankets that can be used to protect any item, since it can be produced with any length or thickness.

## Description

### FIELD OF THE INVENTION

Mixture of Oxidized Polyacrylonitrile Fibers (OPF) which are molecularly stabilized by means of thermal processing and Polyethylene Terephtalate Fibers (PES) which produce a degree of fireproofing and suitable tactile qualities and anti-allergic such that it can be used for any application against fire both in people as well as in furniture and properties.

### OBJECT OF THE INVENTION

This blanket which is fireproof and the main object being the protection against fire of furniture, properties and people and/or preventing that due to its location, profession, work within a determined environment has potential risk of fire. This mixture is reinforced mechanically in order to provide the blanket with the transverse and longitudinal resistance properties that are required for same to be used for the following applications, namely: any type of fire-protective clothing and the applications thereof. Fireproof cushioning layer for furniture, bed linen, mattresses, seats and backrests in motor vehicles, trains and aircraft. Fire blanket to go through fire and fire-protective for any furniture, property or people. Support for wallpaper and fire curtains. Fire-protective under-carpet padding. Fire-protective thermal blankets.

### BACKGROUND OF THE INVENTION

Patent Application MX 91000150, and Patents JP 9059857, JP 2002052307, JP 2001279073, JP 2003183509, JP 2004300601, and US 6,498,227 B1, are known for referring to a process, additives or coatings for putting off fires in none of the cases the clothing composition is mentioned, some cases utilize both carbon black as well as red phosphorus but never as part of the product. Likewise, patent JP 8074141 is a fire-retardant product, and utilizes compounds other than the fibers thereof, and our invention is not fire-retardant but fireproof.

There are previous documents describing fibers such as Application 2203006, PA/a/1996/006745, Publication No. 166068 and Patent JP 2003268651 are different from our invention since they show the disadvantage of not having adequate flexibility and rough aspect to the tact.

Patent Application WO2004/031465 A1, WO 0242534, US 6,812,171 B2 and JP2003239163 specify that non-tissue is composed of two layers, an acrylic fiber with flame resistance with its characteristics and a non-woven carbon fiber clothing with its characteristics being produced applying a carbonization treatment. Ours is a process of the fiber mixture and no treatment of carbonization thereof.

Patent Application WO 99/37852, MX 9606745 and Patent JP 2004270095 describe a treatment for achieving flame delay, however, unlike what is proposed in the present invention it is not a treatment on fibers but a combination thereof for obtaining an end product, which is fireproof. Patent Application EP 1 466 940 A1 and Patent Application US 2004/0241440 A1 describe a carbon nano-fiber compound and elastomers in dispersion, composition resulting from the constitution different from the present invention.

Application JP2002129456 is about a process for making a flame-retardant cushion which does not lose resiliency throughout time and it is achieved by placing the carbon fibers in different directions. Ours is a mixture of two types of fibers passed through a mechanical process for forming a fireproof non-woven cloth.

Some of these documents show a fiber having adequate characteristics of flexibility, these are obtained by means of a process which is different in that the process of the present invention consists in mixing the 2 fibers by specified weights, varying the percentages of the 2 fibers according to the final application within a range of 50/50 up to 90/10 being the first percentage of the OPF fiber and the second PES. Mixed through a system of barbed rolls named loaders/weighs which homogenize the dosed quantity of each component. From there it goes through an air system which mixes again the 2 components in order to achieve a greater homogeneity named fine opener, leaving a bicolor mixture. This web goes through a pre-punched mechanically assembled system, punching in both sides which tridimensionally entwine the fibers giving them longitudinal and transversal resistance having as a consequence a non-woven "cloth" with predetermined weight by squared meter. It is rolled and borders are cut widewise wishing to obtain rolls of a specific length and exact width. It goes through a calendaring system with pressure and temperature for giving a homogeneous and calibrated thickness throughout the entire cloth length, being this the product to be cut in the necessary dimensions. And, on the other hand, the previously mentioned document product has a completely different process.

### DETAILED DESCRIPTION OF THE INVENTION

Mixing the 2 fibers with specified weights, varying the percentages of the 2 fibers in accordance to the final application within a range of 50/50 up to 90/10 being the first percentage of the OPF fiber and the second PES. Mixed through a system of barbed rolls named loaders/weighs which homogenize the dosed quantity of each component. From there it goes through an air system which mixes again the 2 components in order to achieve a greater homogeneity named fine opener, leaving a bicolor mixture. From there it goes to a carding system named high production carding prepared for handling fine fibers which forms a gray color web by the exact mixture of the 2 fibers. This web goes through a pre-punched mechanically assembled system, punching in both sides which tridimensionally entwine the fibers giving them longitudinal and transversal resistance having as a consequence a non-woven "cloth" with predetermined weight by squared meter. It is rolled and borders are cut widewise wishing to obtain rolls of a specific length and exact width. It goes through a calendaring system with pressure and temperature for giving a homogeneous and calibrated thickness throughout the entire cloth length, being this the product to be cut in the necessary dimensions.

### EXAMPLE

The blanket can be exposed to fire directly at temperatures greater than 1000°C for a period of time of 15 seconds without being burned nor producing heat.

### PREFERRED EMBODIMENT OF THE INVENTION

The preferred embodiments of the fireproof blanket are in a presentation in such manner that it may cover any type of object in order to prevent it from burning. At the same time, it can be used for putting off small fires just by covering the fire.

On the other hand, it can be used for people who are within a property being on fire, they just have to cover themselves with the same and go through the fire with no risk of burning themselves.

On the other hand, it can be used for clothing or blanket construction against fires for those people who are at fire risks such as auto racing pilots or test pilots.

Also for the building of furniture, floor coverings, wall coverings, roof coverings for preventing fires. For cushioning furniture, bed linen, cushions, seats and backrests in motor vehicles, trains and aircraft. Cover for furniture for preventing from being burned. It can be used as a fire-protective blanket for protecting any type of article since it can be produced with any length and thickness. Support for wallpaper and fire curtains. Fire-protective under-carpet padding. Fire-protective thermal blankets. Fire-protective blankets that can be used to go through fires at hotels, prisons, trains, airplanes, spacecraft, trains, ships. Clothing for car pilots, airplane pilots, train drivers. Clothing or blanket for people who work with fire such as steel factories, application of electric welding, grinding, cuts with torches or as protection for stopping or having sparks, hot washers, obstruct flashes.

Having described enough and clear my invention, I consider as a novelty and thus claim as my exclusive property, the content in the following clauses:

## Claims

1. The fireproof blanket for protecting people, furniture and properties against fire **characterized in that** it is made of Oxidized Polyacrylonitrile Fibers (OPF) going from 50% to 90% and of Polyethylene Terephtalate Fibers (PES) going from 50% to 10%.

2. Process for obtaining the fireproof blanket of claim 1 wherein it consists in the following steps: mixing the 2 fibers by specified weights, varying the percentages of the 2 fibers in accordance to the final application within a range of 50/50 up to 90/10 being the first percentage of the OPF fiber and the second PES. Mixed through a system of barbed rolls named loaders/weighs which homogenize the dosed quantity of each component. From there it goes through an air system which mixes again the 2 components in order to achieve a greater homogeneity named fine opener, leaving a bicolor mixture. From there it goes to a carding system named high production carding prepared for handling fine fibers which forms a gray color web by the exact mixture of the 2 fibers. This web goes through a pre-punched mechanically assembled system, punching in both sides which tridimensionally entwine the fibers giving them longitudinal and transversal resistance having as a consequence a non-woven "cloth" with predetermined weight by squared meter. It is rolled and borders are cut widewise wishing to obtain rolls of a specific length and exact width. It goes through a calendaring system with pressure and temperature for giving a homogeneous and calibrated thickness throughout the entire cloth length, being this the product to be cut in the necessary dimensions.

3. Blanket according to claim 1 wherein the raw materials used are OPF which are molecularly stabilized through a thermal process and PES.

4. The process according to claim 2 wherein mixing the 2 fibers is for obtaining the desired fireproof degree and the adequate tactile properties in order to be used in any application to the extreme that it may be in contact with the skin without causing any type of allergic reaction due to an inert material.

5. The process according to claims 2 and/or 4 wherein this mixture is reinforced mechanically in order to provide the blanket with the transverse and longitudinal resistance properties that are required for same to be used in different protective applications against fire in people, furniture and properties.

6. The fireproof blanket for protecting people, furniture and properties against fire according to claims 1 and 3 wherein the embodiments are a blanket that may be produced in different thicknesses, lengths for the several applications it may be given.

7. Uses of the blanket of claims 1, 3 and 6 wherein they are: to make all types of clothing against fire and its applications or as fireproof cushioning layer for furniture, bed linen, mattresses, seats and backrests in motor vehicles, trains and aircraft, or as fire blankets or as support for wallpaper and fire curtain or as fire-protective under-carpet padding or fire-protective thermal blanket.

8. Uses according to claim 7 wherein the protective blankets are for going through fires in hotels, prisons, trains, airplanes, spacecraft, ships, automobiles or as clothing for car pilots, plane pilots, train drivers or as clothing or cover for people who work with fire such as steel factories, application of electric welding, grinding, cuts with torches or as protection for stopping or having sparks, hot washers, obstruct flashes or as cover for furniture in order to prevent them from burning or for pipes or ducts which require protection against fire according to the applicable building standards, as protective blanket against fires for protecting any article, furniture or property, since it can be made of any length and thickness.
